Europäisches Patentamt

European Patent Office

Office européen des brevets

(19)

(11) Veröffentlichungsnummer : **0 339 029 B1**

## (12) EUROPÄISCHE PATENTSCHRIFT

(45) Veröffentlichungstag der Patentschrift :
12.08.92 Patentblatt 92/33

(51) Int. Cl.⁵ : **F16N 11/10, H01M 6/38**

(21) Anmeldenummer : **88900070.9**

(22) Anmeldetag : **12.12.87**

(86) Internationale Anmeldenummer :
**PCT/DE87/00592**

(87) Internationale Veröffentlichungsnummer :
**WO 88/04751 30.06.88 Gazette 88/14**

(54) **VORRICHTUNG ZUM KONTINUIERLICHEN ZUFÜHREN VON FLÜSSIGEN ODER VISKOSEN MEDIEN, INSBESONDERE VON SCHMIERSTOFFEN.**

(30) Priorität : **23.12.86 DE 3644207**

(43) Veröffentlichungstag der Anmeldung :
**02.11.89 Patentblatt 89/44**

(45) Bekanntmachung des Hinweises auf die
Patenterteilung :
**12.08.92 Patentblatt 92/33**

(84) Benannte Vertragsstaaten :
**CH FR GB IT LI NL SE**

(56) Entgegenhaltungen :
**DE-A- 2 520 241**
**DE-B- 2 139 771**
**US-A- 2 993 948**

(56) Entgegenhaltungen :
**US-A- 3 430 731**
**US-A- 3 657 021**
**US-A- 3 743 915**
**US-A- 3 745 049**
**US-A- 3 945 193**

(73) Patentinhaber : **Satzinger GmbH & Co**
**Hammelburger Str. 21**
**W-8737 Euerdorf (DE)**

(72) Erfinder : **JORISSEN, Bernd**
**Hammelburger Str. 21**
**W-8737 Euerdorf (DE)**

(74) Vertreter : **Metzler, Jürgen, Dipl.-Ing.**
**Ketschendorfer Strasse 76**
**W-8630 Coburg (DE)**

## Beschreibung

Die vorliegende Erfindung betrifft eine Vorrichtung zum kontinuierlichen Zuführen von flüssigen oder viskosen Medien, insbesondere von Schmierstoffen, nach dem Oberbegriff des Patentanspruchs 1.

Es ist eine Schmierbüchse bekannt, die einen verschlossenen ausdehnbaren Körper und einen mit Schmierstoff gefüllten Raum aufweist, wobei in dem dichtverschlossenen ausdehnbaren Körper eine zu einem beliebigen Zeitpunkt in Gang setzbare, aus einem galvanischen Element bestehende Vorrichtung zur Entwicklung von Gas vorgesehen ist, das im ausdehnbaren Körper einen Druck aufbaut, durch den er sich täglich um ein gewisses Maß ausdehnt und dadurch über einen Schmierstoffkanal Schmierstoff aus dem mit Schmierstoff gefüllten Raum einer Schmierstelle zuführt (DE-B-1256001). Bei dieser bekannten Schmierbüchse können, wenn der ausdehnbare Körper nicht gasdicht ist, die Druckgase teilweise durch die Wandung des ausdehnbaren Körpers entweichen und in den Schmiermittelbehälter gelangen. Um dies zu vermeiden, ist es bekannt geworden, zwischen dem ausdehnbaren Körper und dem Schmierstoffraum eine Trenneinrichtung vorzusehen, die an der zylindrischen Innenwand der Schmierbüchse dichtend gleitet (DE-B-2139771).

Diesen bekannten Ausführungen ist gemeinsam, daß in dem dichtverschlossenen ausdehnbaren Körper eine Elektrolytflüssigkeit vorgesehen ist, in die mit Hilfe einer Schraube ein Korrosionselement eingestoßen wird, um die Gasentwicklung zu beginnen. Ganz abgesehen von dem großen Raumbedarf für die Elektrolytflüssigkeit und der Gefahr des Austretens der Elektrolytflüssigkeit und damit Gefährdung der Umwelt, kann bei diesen bekannten Ausführungen die einmal begonnene Gasentwicklung nicht mehr gestoppt und unterbrochen werden. Ein Austausch des Elektrolyt- und/oder des Schmierstoffbehälters ist nicht ohne Zerstörung der Schmierbüchse möglich. In gleicher Weise kann ein Nachfüllen des Behälters mit Schmierstoff nicht ohne weiteres vorgenommen werden.

Bei einer weiteren bekannten Schmiervorrichtung (DE-B 2520241) ist die Einrichtung zur Gaserzeugung, die eine aus Elektrolyt, Anode und Kathode bestehende Zelle aufweist, fest innerhalb des Schmierbehälters angeordnet.

Bei dieser bekannten Vorrichtung kann zwar die Gasentwicklung durch Unterbrechen des elektrischen Stromkreises gestoppt werden, aber ein Austausch des Elektrolyt- und/oder Schmierstoffbehälters ist ebenfalls nicht zerstörungsfrei möglich. Auch nimmt die Einrichtung zur Gaserzeugung einen verhältnismäßig großen Raum ein.

Die Aufgabe der vorliegenden Erfindung besteht darin, den Aufbau der Vorrichtung zu vereinfachen und seine Handhabung wie auch Inbetriebnahme zu erleichtern, den Raum .für das zu spendende Medium im Verhältnis zur gaserzeugenden Einheit zu vergrößern sowie ein Nachrüsten in einfacher Weise zu ermöglichen, ohne daß es zu einem Austreten des Elektrolyten kommt.

Diese Aufgabe wird durch die im Kennzeichen des Patentanspruchs 1 aufgeführten Merkmale gelöst.

Durch die Verwendung des einsetzbaren Einsatzes wird der Platzbedarf für den gaserzeugenden Teil wesentlich reduziert. Durch den einsetzbaren Einsatz ist nicht nur die Möglichkeit des Ersatzes bei Erschöpfung der Zelle und des Nachfüllens des zuzuführenden Mediums, z.B. des Schmierstoffes, gegeben, sondern der Einsatz wirkt mit entsprechenden Teilen des Gegenstückes als "Schalter" für das Ingangsetzen und Stoppen der Gaserzeugung, ohne daß es in der Regel eines besonderen Schalters bedarf.

Zu diesem Zweck ist die Zelle verschiebbar im Einsatz angeordnet und wird beispielsweise durch einen Vorsprung im Behälterdeckel, gegen den die Zelle zur Anlage kommt, beim Einschrauben des Einsatzes in den Stromkreis eingeschoben. Es bedarf somit nicht der Einführung von Steckern u. dgl., um den Stromkreis zu schließen.

In den Unteransprüchen sind weitere Maßnahmen zur zweckmäßigen Ausführung und Weiterbildung der erfindungsgemäßen Vorrichtung beschrieben.

So hat die Maßnahme nach Anspruch 2 den Zweck, ein unbeabsichtigtes Vorschieben der Zelle im Einsatz zu verhindern. Dabei kann es sich um eine Feder oder einen gleiche Wirkung erzielenden (federnden) Vorsprung handeln.

Mit der Maßnahme nach Anspruch 3 wird beispielsweise in einfacher Weise eine Einrichtung geschaffen, die beim Einsetzen des Einsatzes die Gaserzeugung in Gang setzt. Das kann auch - eventuell als zusätzliche Maßnahme - durch den in Anspruch 4 bezeichneten Schalter zum Schließen des Stromkreises geschehen.

Um bei einem Zeitweiligen Stillsetzen bzw. Unterbrechen der Gaserzeugung ein Entweichen des Druckgases zu verhindern, kann das in Anspruch 5 beschriebene Rückschlagventil, das gleichzeitig während des Transportes bis zum Einbau der Vorrichtung, also im Anlieferungszustand, die Vorrichtung schützt, vorgesehen werden.

Nachdem die Gasausbeute der kompakten Zelle begrenzt ist, kann gemäß Anspruch 6 ein Teil des für die Gaserzeugung benötigten Wassers außerhalb der Zelle in einem separaten Raum vorgesehen werden. Dieser Raum kann nach Anspruch 7 mit einer wasseraufnehmenden Masse ausgefüllt werden. Durch die Dampfdruckunterschiede zwischen der Zelle und der Masse - diese hat vorzugsweise einen niedrigeren, jedoch annähernd gleichen Dampfdruck als der Elektrolyt - kann je nach Bedarf Wasser von der Zelle in die Masse ab- oder umgekehrt von der Masse wieder an die Zelle zurückgegeben werden. Diese Masse hat weiterhin den Vorteil, daß sie Hohlräume ausfüllt. Dadurch wird die Menge des in den Hohlräumen üblicherweise vorhandenen Luftsauerstoffs reduziert. Die Zelle, die normalerweise beim Ingangsetzen erst den Luftsauerstoff verbraucht, ehe sie Gas erzeugt, wird somit viel früher ihrem eigentlichen Zweck - d.h. Gaserzeugunggerecht. Um die elektrischen Übergangswiderstände zu verhindern, können der Masse entsprechende Zusatzstoffe zugesetzt werden.

Dem gleichen Zweck der Vergrößerung der Gasausbeute dient auch die in Anspruch 8 beschriebene Maßnahme, nach der die Vorrichtung mit zwei oder mehr Zellen versehen ist, die im Anlieferungszustand zueinander isoliert, beim Einsetzen des Einsatzes in den Behälterdeckel in elektrische Verbindung miteinander gebracht werden. Zu diesem Zweck kann ein Schalter zwischen den Zellen angeordnet werden - Anspruch 9 - und/oder der Schalter selbst nach Anspruch 10 als ein elastisches Federelement ausgebildet sein, das die Zellen vor dem Einsetzen elektrisch isolierend trennt, aber nach dem Einsetzen stromleitend miteinander verbindet. Selbstverständlich können die Zellen auch zeitlich nacheinander in den Stromkreis eingeschaltet oder einbezogen werden, d.h. die zweite Zelle wird erst dann aktiviert, wenn die erste bereits verbraucht ist.

In den weiteren Unteransprüchen sind besondere konstruktive Ausbildungen der erfindungsgemäßen Vorrichtung bzw. der einzelnen Teile beschrieben. Anstelle der dort beschriebenen Mittel, Maßnahmen und Verbindungsverfahren sind selbstverständlich Äquivalente möglich.

Neben den bereits erwähnten Merkmalen/Vorteilen der erfindungsgemäßen Lösung können noch folgende aufgeführt werden:

– Die Erfindung ist nicht auf die Anwendung als Schmierbüchse beschränkt, sondern es können sowohl flüssige als auch viskose Medien anderer Art damit zugeführt werden.

– Je nach Bedarf können Zellen unterschiedlicher Art und Leistungsvermögen eingesetzt werden, es besteht auch - wie erwähnt - die Möglichkeit, mehrere Zellen in einem Einsatz anzuordnen, die gleichzeitig oder zeitlich hintereinander in Betrieb genommen werden.

– Solange der Einsatz nicht eingeschraubt ist, findet noch keine Gasentwicklung statt. Um ein unbeabsichtigtes Ingangsetzen während der Laserung und des Transportes zu vermeiden, kann die die Zelle aufnehmende Bohrung durch ein Plättchen od.dgl. verschlossen werden.

– Die Bohrung im Behälterdeckel kann im Anlieferungszustand mit einem Verschlußstopfen verschlossen sein, der beim Inbetriebsetzen entfernt wird.

– Um die Gaserzeugung zu erhöhen und/oder zu beschleunigen, kann eine zusätzliche externe Stromquelle vorgesehen werden.

Die Erfindung soll nachstehend anhand eines bevorzugten Ausführungsbeispieles näher beschrieben werden.

Es zeigen:

Fig. 1 einen teilweisen Querschnitt durch einen Schmierstoffgeber mit den wesentlichen Teilen vor dem Ingangsetzen.

Fig. 2 einen vergrößerten Ausschnitt mit der Einzelheit bei "X" nach Fig. 1, und zwar mit bereits eingesetztem Einsatz, d.h. nach Inbetriebnahme.

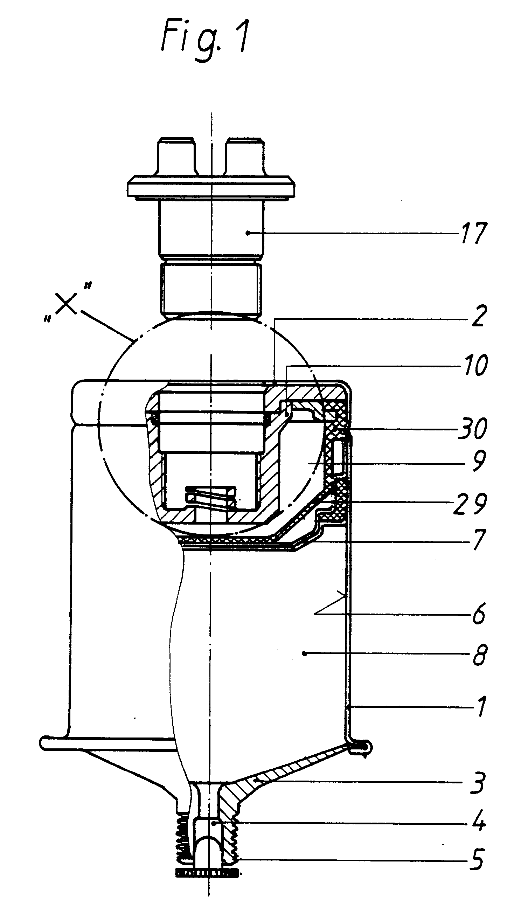

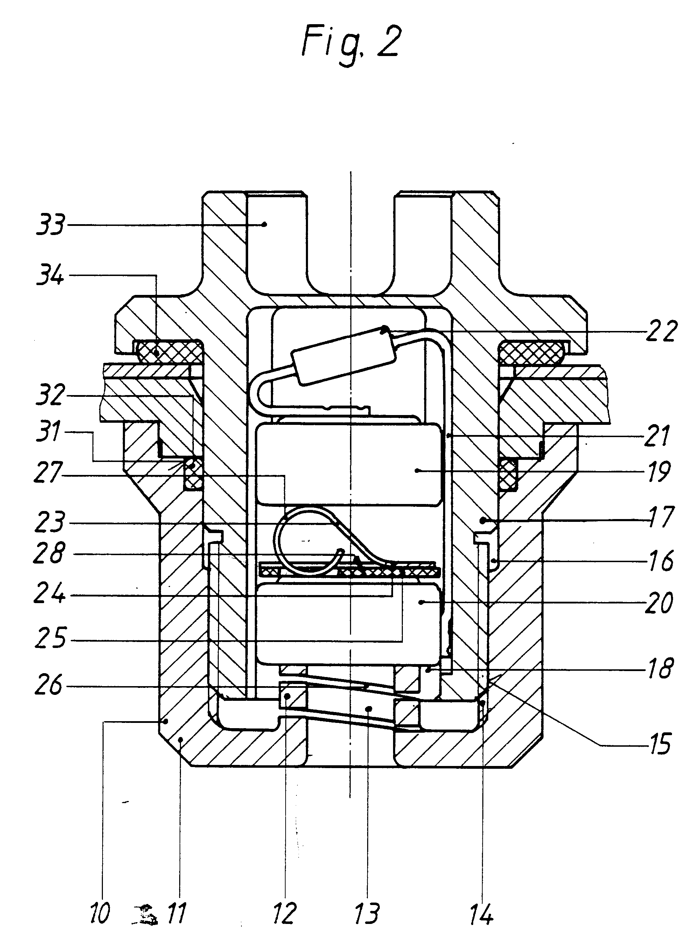

Die Schmierbüchse nach der Fig. 1 und 2 besteht aus einem Behälter 1, der oben mit einem Behälterdeckel 2 und unten mit einem über ein Gewinde 5 in dem zu schierenden Maschinenteil zu befestigenden trichterförmigen Boden 3 mit einer Auslaßbohrung 4 verschlossen ist. In der zylindrischen Bohrung 6 des Behälters 1 ist ein Kolben 7 verschiebbar eingesetzt, der die dem Boden 3 zugekehrte Schmierstoffkammer 8 von der Druckgaskammer 9 trennt und der im Betriebszustand den Schmierstoff aus der Schmierstoffkammer 8 durch die Auslaßbohrung 4 in das zu schmierende Maschinenteil drückt. Der Behälterdeckel 2 ist bei diesem Beispiel mit einem büchsenförmig ausgebildeten Ansatz 10 versehen, dessen Boden 11 einen nach außen gerichteten Vorsprung 12 mit einer Durchtrittsbohrung 13 aufweist. In die mit einem Innengewinde 14 versehene Bohrung 16 des büchsenförmigen Ansatzes 10 wird ein mit einem Außengewinde 15 versehender Einsatz 17 eingeschraubt, der dem Vorsprung 12 gegenüberliegend eine stirnseitige Bohrung 18 aufweist. Diese Bohrung 18 dient zur Aufnahme zweier jeweils aus einer Anode, Kathode und einem Elektrolyten bestehender Zelle 19 und 20 zu Erzeugung eines Gases, welches aus den Zellen austreten und durch die Durchtrittsbohrung 13 in die Druckgaskammer 9 eintreten kann.

Die beiden Zellen 19 und 20 sind über eine Stromleitung 21, in der ein äußerer elektrischer Widerstand 22 angeordnet ist, miteinander verbunden. Zwischen den beiden Zellen 19 und 20 ist ein elastisches Federelement 23 vorgesehen, das die beiden Zellen 19 und 20 im nicht-eingesetzten Zustand auseinander drückt. Dieses Federelement 23 liegt im nichteingesetzten Zustand nur über die Zungen 24 auf der Isolierschicht 25 der Zelle 20 auf, sodaß der Stromkreis nicht geschlossen ist und die Gaserzeugung noch nicht beginnt.

Wird der Einsatz 17 in den Behälterdeckel 2 eingeschraubt, dann schiebt der Vorsprung 12, der durch schraubenförmig verlaufende Ausnehmungen 26 elastisch nachgiebig ausgebildet ist, die Zelle 20 nach oben, wodurch das Federelement 23 so verformt wird, daß sein oesenförmiger Abschnitt 27 auf der Oberfläche 28 der Zelle 20 zur Auflage kommt. Dadurch ist der elektrische Stromkreis zwischen beiden Zellen 19, 20 geschlossen und die Gaserzeugung kann beginnen (Fig. 2).

Das erzeugte Gas tritt - wie erwähnt - durch die Durchtrittsbohrung 13 in die Druckgaskammer 9 ein und drückt unter Ausdehnung des die Druckgaskammer 9 abschließenden Ausdehnungskörpers 29 den Kolben 7 nach unten und damit den Schmierstoff gegen die Auslaßbohrung 4 und in das zu schmierende Maschinenteil.

Der Behälter 1 kann aus einer dünnwandigen Blechbüchse gebildet werden, in welcher der Behälterdeckel 2 eingebördelt ist, an dem der Ausdehnungskörper 29, mit seinem Bund 30 gleichzeitig eine Dichtung bildend, befestigt ist. Der die Druckgaskammer 9 bildende Ausdehnungskörper 29 ist im Anfangszustand mit einer Masse ausgefüllt, durch die einerseits der Luftsauerstoff verdrängt ist und andererseits einen zusätzlichen Wasservorrat für die Zellen enthält.

Mit dem Behälterdeckel 2 in geeigneter Weise, z.B. durch Verschweißen Verkleben od. dgl., verbunden ist der büchsenförmige Ansatz 10, wobei in einer zwischen den beiden Teilen gebildeten Ringnut 31 ein Rundschnurring 32 zur Abdichtung gegenüber dem eingeschraubten Einsatz 17 angeordnet wird. Um den Einsatz 17 in den Behälterdeckel 2 bzw. den damit verbundenen Ansatz 10 einschrauben zu können, ist der Einsatz 17 an seiner Oberseite mit einem Sechskant 33 und anderen Angriffen zum Angriff entsprechender Werkzeuge vorgesehen. Eine Flachdichtung 34 dichtet Einsatz 17 gegenüber Behälterdeckel 2 ab.

Der trichterförmige Boden 3 wird zweckmäßigerweise aus einem durchsichtigen Kunststoff gefertigt und in geeigneter Weise mit dem Behälter 1 verbunden. Durch diese Werkstoffwahl ist es möglich, rein optisch zu erkennen, ob die Schmierstoffkammer 8 noch Schmierstoff enthält und - aufgrund der Postition des Kolbens 7 - wieviel Schmierstoff. Der Behälterdeckel 2 mit Ansatz 10, der Kolben 7 und der Einsatz 17 können aus Kunststoff gefertigt werden, der gasundurchlässig ist.

Als Zellen 19, 20 zur Erzeugung des Gases können bekannte galvanische Zellen, wie sie z.B. zur Stromerzeugung in Hörgeräten oder zur Erzeugung von Wasserstoff- oder Sauerstoffgas verwendet werden, zur Anwendung gelangen. Während des Transportes und vor der Inbetriebnahme der Schmierbüchse ist die Zelle 20 in der Bohrung 18 noch nicht in leitender Verbindung mit dem Federelement 23, so daß der Stromkreis noch nicht geschlossen ist. Am Einsatzort wird der Behälter 1 mit dem zu schmierenden Maschinenteil, z.B. über ein am trichterförmigen Boden 3 vorgesehenes Gewinde 5, verbunden. Sodann wird nach Entfernen eines für den Transport vorgesehenen Stopfens (nicht gezeigt), der Einsatz 17 in den Behälterdeckel 2 eingeschraubt, wobei - wie bereits erwähnt - der Vorsprung 12 im Behälterdeckel 2 die Zelle 20 unter Verformung des Federelements 23 gegen die Zelle 19 bewegt. Dabei kommt die elektrisch leitende Öse 27 des Federelementes 23 in Berührung mit der Oberfläche der Zelle 20. Dadurch wird der Stromkreis geschlossen und die Gaserzeugung setzt ein.

Um die Gaserzeugung zu unterbrechen, wird der Einsatz 17 soweit zurückgedreht, bis die elektrisch leitende Öse 27 des Federelementes 23 außer Berührung mit der Zelle 20 kommt und der Stromkreis unterbrochen wird.

Die Erfindung ist selbstverständlich nicht auf das vorstehend beschriebene Ausführungsbeispiel beschränkt. Es sind viele konstruktive Abänderungen der Teile möglich. So können anstelle von zwei Zellen nur eine oder drei und mehr verwendet werden. Die Mittel zum.Verschieben der Zelle(n) können statt am Behälterdeckel auch am Einsatz vorgesehen werden. Die elektrische Verbindung des Stromkreises, in dem die Zelle 19, 20 angeordnet ist (sind), kann auf andere Weise geschehen, z.B. durch Einbau eines Schalters. Auch kann auf den Ausdehnungskörper oder Trennkol - ben ganz verzichtet und/oder der Ansatz 10 einstückig mit dem Behälterdeckel 2 ausgebildet werden. Um den Vorratsraum für das Schmiermittel zu vergrößern, kann ferner der Kolben in seiner Querschnittsform dem mit dem Ansatz 10 versehenen Behälterdeckel 2 angepaßt werden, wodurch die anfängliche Druckgaskammer sehr klein wird.

## Patentansprüche

1. Vorrichtung zum kontinuierlichen Zuführen von flüssigen oder viskosen Medien, insbesondere von Schmierstoffen, mit einem durch eine Trenneinrichtung (7) in eine Kammer (8) zur Aufnahme des Mediums und in eine Druckgaskammer (9) unterteilten Behälter mit einem Behälterdeckel (2), einer zu einem beliebigen Zeitpunkt in Gang setzbaren Vorrichtung mit mindestens einer aus Elektrolyt, Anode und Kathode bestehenden kompakten Zelle (19, 20) zur elektrochemischen Erzeugung von Gas, das in der Druckgaskammer einen Druck aufbaut, durch den die Trenneinrichtung sich in einer Zeiteinheit um ein gewisses Maß ausdehnt und/oder verschiebt und dadurch über einen Kanal (4) das Medium aus der Kammer (8) zur Abgabe des Mediums fördert, dadurch gekennzeichnet, daß die Zelle (19, 20) zusammen mit Teilen eines die Anode und die Kathode miteinander verbindenden und einen elektrischen Widerstand (22) aufweisenden Stromkreises (21) in einem in den Behälterdeckel (2) einsetzbaren Einsatz (17) vorgesehen ist, daß die Zelle (19, 20) im Einsatz (17) verschiebbar angeordnet ist, und daß Mittel vorgesehen sind, durch die beim Einsetzen des Einsatzes (17) in den Behälterdeckel (2) die Zelle (19, 20) verschoben und dadurch der Stomkreis der Gaserzeugung geschlossen wird.

2. Vorrichtung nach Anspruch 1, dadurch gekennzeichnet, daß die Zelle (19, 20) im Einsatz (17) gegen einen Widerstand verschiebbar angeordnet ist.

3. Vorrichtung nach Anspruch 1 oder 2, dadurch gekennzeichnet, daß die Mittel (12) zum Verschieben der Zelle (19, 20) am Behälterdeckel (2) vorgesehen sind.

4. Vorrichtung nach einem der Ansprüche 1 bis 3, dadurch gekennzeichnet, daß im elektrischen Stromkreis ein Schalter vorgesehen ist.

5. Vorrichtung nach einem der Ansprüche 1 bis 4, dadurch gekennzeichnet, daß im Behälterdeckel (2) ein Rückschlagventil zur Verhinderung des Entweichens von Druckgas bei einem zeitweiligen Stillsetzen bzw. Unterbrechen der Gaserzeugung eingesetzt ist.

6. Vorrichtung nach einem der Ansprüche 1 bis 5, dadurch gekennzeichnet, daß außerhalb der Zelle (19, 20) ein zusätzlicher Raum zur Aufnahme des für die Gaserzeugung benötigten Wassers vorgesehen ist.

7. Vorrichtung nach Anspruch 6, dadurch gekennzeichnet, daß der Raum im Bereich der Druckgaskammer (9) angeordnet und mit einer wässeraufnehmenden Masse ausgefüllt ist.

8. Vorrichtung nach einem der Ansprüche 1 bis 7, dadurch gekennzeichnet, daß in der Bohrung (18) des Einsatzes (17) zwei oder mehr Zellen (19, 20) angeordnet sind, die zunächst zueinander isoliert, beim Einsetzen des Einsatzes (17) in den Behälterdeckel (2) zum Schließen des Stromkreises in elektrische Verbindung miteinander gebracht sind.

9. Vorrichtung nach Anspruch 8 in Verbindung mit Anspruch 4, dadurch gekennzeichnet, daß der Schalter zwischen den Zellen (19, 20) angeordnet ist.

10. Vorrichtung nach einem der Ansprüche 8 oder 9, dadurch gekennzeichnet, daß zwischen den Zellen (19, 20) ein elastisches Federelement (23) angeordnet ist, das die Zellen (19, 20) vor dem Einsetzen des Einsatzes (17) isolierend trennt, aber nach dem Einsetzen stromleitend miteinander verbindet

11. Vorrichtung nach einem der Ansprüche 1 bis 10, dadurch gekennzeichnet, daß der Behälterdeckel (2) einen büchsenförmig ausgebildeten Ansatz (10) zur Aufnahme des Einsatzes (17) aufweist.

12. Vorrichtung nach Anspruch 11, dadurch gekennzeichnet, daß der Boden (11) des büchsenförmigen Ansatzes (10) mit einem axialen, gegen den Einsatz (17) gerichteten Vorsprung (12) und einer Durchtrittsbohrung (13) für das Gas versehen ist.

13. Vorrichtung nach Anspruch 12, dadurch gekennzeichnet, daß der axial gegen den Einsatz (17) gerichtete Vorsprung (12) durch schraubenförmig verlaufende Ausnehmungen (26) oder Schlitze elastisch nachgiebig ausgebildet ist.

## Claims

1. Device for continuous feeding of liquid or viscous media, in particular lubricants, with a container comprising a container cover (2), which container is seperated by a seperating device (7) into a chamber (8) to accomodate the medium and into a pressure gas chamber (9), with a device with at least one compact cell (19, 20) for electrochemical generation of gas, consisting of electrolyte, anode and cathode, which can be iniated at any time and which builds up a pressure in the pressure gas chamber causing the expansion and/or movement of the seperate device to a certain extent in a time unit and by this feeds the medium through a channel (4) from the chamber (8) to the delivery, characterised in that the cell (19, 20) together with parts of an electric circuit (21) containing an electric resistance (22) and connecting the anode and the cathode with each other is provided in an insert (17) which can be inserted into the container cover (2), that the cell (19, 20) is arranged displaceably in the insert (17) and that means are provided by which, when inserting the insert (17) into the container cover (2), the cell (19, 20) will be displaced and consequently the electric circuit for the gas generation will be closed.

2. Device according to claim 1, characterised in that the cell (19, 20) is arranged in the insert (17) displaceably relative to a resistance.

3. Device according to claim 1 or 2, characterised in that the means to displace the cell (19, 20) are provided at !he container cover (2).

4. Device according to one of the claims 1 to 3, characterised in that a switch is provided in the electric circuit.

EP 0 339 029 B1

5. Device according to one of the claims 1 to 4, characterised in that in the container cover (2) a return valve is provided to prevent the leaking of the pressure gas during temporary shut-down or interruption of the gas generation.

6. Device according to one of the claims 1 to 5, characerised in that outside the cell (19, 20) an additional space, accomodating water-for the generation of gas, is provided.

7. Device according to claim 6, characterised in that the space is provided in the region of the pressure chamber (9) and is filled with a water-absorbing material.

8. Device according to one of the claims 1 to 7, characterised in that in the hole (18) of the insert (17) two or more cells (19, 20) are arranged, which are first isolated from each other, and during the insertion of the insert (17) into the container cover (2) for the closing of the electric circuit, are brought into electrical contact with each other.

9. Device according to claim 8 in connection with claim 4, characterised in that the switch is provided between the cells (19, 20).

10. Device according to one of the claims 8 or 9, characterised in that a flexible spring component (23) is arranged between the cells (19, 20), by which the cells (19, 20) before the insertion of the insert (17) are seperated isolated, but after the insertion are connected with each other electrically conductive.

11. Device according to one of the claims 1 to 10, characterised in that the container cover (2) has a canister-shaped spigot (10) to accomodate the insert (17).

12. Device according to claim 11, characterised in that the bottom (11) of the canister-shaped spigot (10) is provided with an axial protrusion (12), directed towards the insert (17), and a through-hole (13) for the gas.

13. Device according to claim 12, characterised in that the protrusion (12) directed axially towards the insert (17) is constructed elastically flexibly by helical grooves (26) or slots.


## Revendications

1. Dispositif pour l'alimentation en continu de fluides liquides où visqueux, en particulier de lubrifiants, avec un réservoir, avec un couvercle de réservoir (2), subdivisé par un dispositif de séparation (7) en une chambre (8) destinée à recevoir le fluide et une chambre à gaz sous pression (9), un dispositif, pouvant être mis en marche à tout moment au choix, avec au moins une cellule (19, 20), composée d'un électrolyte, d'une anode et d'une cathode, pour le dégagement électrochimique de gaz qui, dans la chambre à gaz sous pression, crée une pression par laquelle le dispositif de séparation se dilate et/ou se déplace, dans une certaine mesure, par unité de temps et, de ce fait, transporte, par un canal (4) le fluide hors de la chambre (8), pour l'alimentation du fluide, caractérisé en ce que la cellule (19, 20) est prévue, ensemble avec des parties d'un circuit électrique (21) reliant l'anode et la cathode l'une à l'autre et présentant une résistance électrique (22), dans un insert (17) pouvant être inséré dans le couvercle de réservoir (2), que la cellule (19, 20) est disposée de manière mobile dans l'insert (17) et qu'il est prévu des moyens par lesquels, lors de l'insertion de l'insert (17) dans le couvercle de réservoir (2), est déplacée la cellule (19, 20) et, de ce fait, est fermé le circuit électrique du dégagement de gaz.

2. Dispositif suivant la revendication 1, caractérisé en ce que la cellule (19, 20) est disposée dans l'insert (17) de manière à pouvoir se déplacer à l'encontre d'une résistance.

3. Dispositif suivant la revendication 1 ou 2, caractérisé en ce que les moyens (12) pour le déplacement de la cellule (19, 20) sont prévus sur le couvercle de réservoir (2).

4. Dispositif suivant l'une des revendications 1 à 3, caractérisé en ce que dans le circuit électrique est prévu un interrupteur.

5. Dispositif suivant l'une des revendications 1 à 4, caractérisé en ce que dans le couvercle de réservoir (2) est placé un clapet de retenue destiné à empêcher l'échappement de gaz sous pression lors d'un arrêt ou d'une interruption temporaire du dégagement de gaz.

6. Dispositif suivant l'une des revendications 1 à 5, caractérisé en ce qu'en dehors de la cellule (19, 20) est prévu un espace supplémentaire pour accueillir l'eau nécessaire pour le dégagement de gaz.

7. Dispositif suivant la revendication 6, caractérisé en ce que l'espace est disposé dans la zone de la chambre de gaz sous pression (9) et rempli d'une masse absorbant l'eau.

8. Dispositif suivant l'une des revendications 1 à 7, caractérisé en ce que dans l'alésage (18) de l'insert (17) sont disposées deux ou plusieurs cellules (19, 20) qui sont tout d'abord isolées l'une de l'autre, lors de l'insertion de l'insert (17) dans le couvercle de réservoir (2), amenées en communication électrique l'une avec l'autre pour fermer le circuit électrique.

9. Dispositif suivant la revendication 4, caractérisé en ce que l'interrupteur est disposé entre les cellules (19, 20).

6

10. Dispositif suivant l'une des revendications 8 ou 9, caractérisé en ce qu'entre les cellules (19, 20) est disposé un élément de ressort élastique (23) qui, avant l'insertion de l'insert (17), sépare de manière isolante les cellules (19, 20), mais, après l'insertion, les relie l'une à l'autre de manière électriquement conductrice.

11. Dispositif suivant l'une des revendications 1 à 10, caractérisé en ce que le couvercle de réservoir (2) présente un épaulement (10) en forme de boîte destiné à recevoir l'insert (17).

12. Dispositif suivant la revendication 11, caractérisé en ce que le fond (11) de l'épaulement (10) en forme de boîte est pourvu d'une saillie (12) axiale orientée contre l'insert (17) et d'un alésage de passage (13) pour le gaz.

13. Dispositif suivant la revendication 12, caractérisé en ce que la saillie (12) orientée axialement contre l'insert (17) se présente de manière élastiquement déformable, grâce à des évidements (26) ou lumières s'étendant de forme hélicoïdale.

# Fig. 1

"X"

17

2

10

30

9

29

7

6

8

1

3

4

5

# Fig. 2